# EUROPÄISCHE PATENTSCHRIFT

(11) **EP 1 975 463 B1**
(45) Veröffentlichungstag und Bekanntmachung des Hinweises auf die Patenterteilung: **28.11.2012**
(21) Anmeldenummer: 08005705.2
(22) Anmeldetag: 26.03.2008
(51) Int. Cl.: F16H 19/06, B23Q 1/26

(54) **Lineareinheit**
Linear unit
Unité linéaire

(30) Priorität: 30.03.2007 DE 202007004694 U
(43) Veröffentlichungstag der Anmeldung: 01.10.2008
(73) Patentinhaber: Robert Bosch GmbH, 70469 Stuttgart (DE)
(72) Erfinder: Keller,Bernhard, 97535 Wasserlosen-Kaisten (DE); Hoherz, Roland, 97490 Kützberg (DE); Anhut, Sven, 97422 Schweinfurt (DE)
(74) Vertreter: Maiß, Harald

(56) Entgegenhaltungen:
- WO-A1-2006/108400
- DE-A1- 4 118 627
- DE-C1- 19 648 680

## Beschreibung

Die Erfindung betrifft eine Lineareinheit, entsprechend dem Oberbegriff des Anspruchs 1 und wie es aus dem Dokument WO 2006/108400 A1 bekannt ist.

Eine Lineareinheit ist beispielsweise aus der DE 37 43 577 C1 bekannt. Bei dieser Lineareinheit ist die freilaufende Rolle mittels Spann-schrauben, welche in Gewindebohrungen der Lagerachse der freilaufenden Rolle eingreifen, an einer Endplatte der Lineareinheit gelagert. Zudem ist der Antriebsriemen mit dem Läufer an zwei Befestigungsstellen verbunden, welche den, der freilaufenden Rolle zugewandten bzw. von dieser abgewandten Enden des Läufers benachbart angeordnet sind. Nachteilig an dieser Anordnung ist, dass sich insbesondere bei großen Baulängen der Lineareinheit das Ober- und Untertrum des Antriebsriemens berühren können, was einen erhöhten Verschleiß bis hin zu einem vorzeitigen Ausfall des Antriebsriemens zur Folge hat.

Aus der guttungsbildenden WO 2006/108400 A1 ist eine weitere Lineareinheit bekannt. Die Lineareinheit umfasst eine Modulhaupteinheit und eine Antriebseinheit. Weiter ist ein bewegliches Tischteil vorgesehen, welches mit einem Zahnriemen verbunden ist, so dass es in Bewegung versetzt werden kann. Der Zahnriemen ist um eine freilaufende Rolle und eine Antriebsrolle herumgeführt. Weiter ist an dem Basisschenkel des Gehäuses ein Führungselement angeordnet, welches das Obertrum des Antriebsriemens vom Untertrum trennt.

Ähnliche Lineareinheiten sind aus der DE 41 18 627 A1 und der DE 196 48 680 C1 bekannt.

Der Nachteil der bekannten Lineareinheiten besteht darin, dass sich das Führungselement über die gesamte Länge des Gehäuses erstreckt, wobei es fest mit diesem verbunden ist. In der Folge muss die Antriebsrolle und/oder die freilaufende Rolle bezüglich der Bewegungsrichtung des Tisches vor oder hinter dem Gehäuse angeordnet werden.

Die Aufgabe der Erfindung besteht darin, eine Lineareinheit zu schaffen, bei der zumindest die freilaufende Rolle innerhalb des Gehäuses angeordnet werden kann. Diese Aufgabe wird durch die kennzeichnenden Merkmale des Anspruchs 1 gelöst.

Vorteilhafterweise weist das Führungselement in einem orthogonal zur Bewegungsrichtung verlaufenden Schnitt eine im Wesentlichen U-förmige Gestalt mit einem Basisschenkel und zwei Seitenschenkeln auf.

Ein besonderer Vorteil ergibt sich jedoch, wenn das Führungselement als ein separates Bauteil ausgebildet ist, wodurch eine zusätzliche Bearbeitung des Gehäuses entfallen kann.

Das Führungselement ist am Gehäuse in dessen Längsrichtung verstellbar und gegebenenfalls arretierbar angeordnet. Wenn dabei eines der Teile, Führungselement oder Gehäuse, eine hinterschnittene Nut aufweist, die zugehörige Vorsprünge des jeweils anderen Teils, Gehäuse oder Führungselement, umgreift, so kann hierdurch eine sowohl in Höhenrichtung als auch in Querrichtung der Lineareinheit stabile Führung des Führungselements erzielt werden.

Um ein zwischen dem Gehäuse und dem Führungselement vorhandenes Spiel einzustellen oder zu beseitigen, können Spieleinstellmittel vorgesehen sein, die dem Führungselement, insbesondere dessen Basisschenkel, zugeordnet sind.

Ist das Führungselement als ein Strangpressprofil ausgebildet, kann in einfacher Weise ein parallel zu dem Basisschenkel verlaufender Verstärkungssteg angeordnet sein, der eine Kammer zur Aufnahme des Untertrums begrenzt und zusätzlich zur Stabilisierung des Führungselements beiträgt.

Zudem kann der Antriebsriemen ein Zahnriemen sein, was an sich bekannt ist.

Die Erfindung wird im Folgenden an einem Ausführungsbeispiel anhand der beigefügten Zeichnungen näher erläutert werden. Es stellen dar:
- Figur 1: eine Perspektivansicht einer erfindungsgemäßen Lineareinheit;
- Figur 2: eine Stirnansicht der Lineareinheit ohne Endplatte gemäß Figur 1;
- Figur 3: eine Schnittansicht der der erfindungsgemäßen Lineareinheit entlang der Linie III-III in Figur 2;
- Figur 4: eine Schnittansicht der erfindungsgemäßen Lineareinheit entlang der Linie IV-IV in Figur 1;
- Figur 5: eine Perspektivansicht des Führungselements.

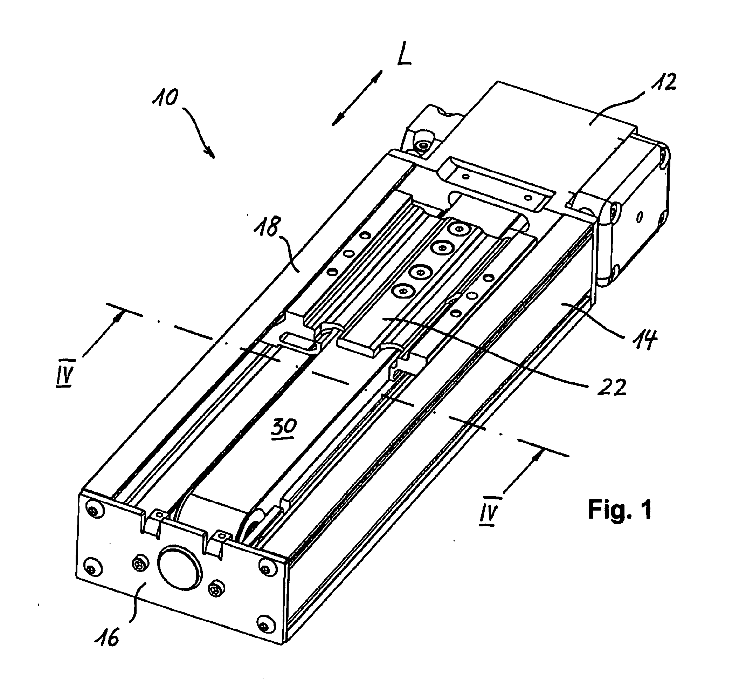

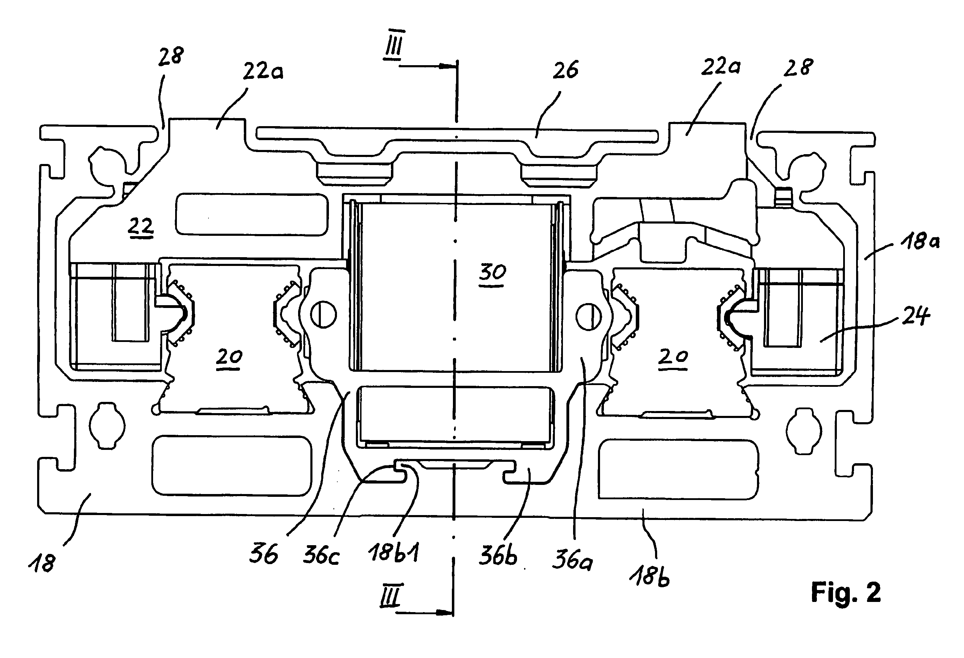

In Figur 1 ist eine erfindungsgemäße Lineareinheit ganz allgemein mit 10 bezeichnet. Sie umfasst eine Antriebseinheit 12 und eine Modulhaupteinheit 14. Der innere Aufbau der Modulhaupteinheit 14 ist aus der Stirnansicht gemäß Figur 2 zu ersehen.

Die Modulhaupteinheit 14 weist ein Gehäuse 18 auf, welches vorteilhafterweise aus einem Strangpressprofil mit im Wesentlichen U-förmigem Querschnitt gebildet ist. Am Basisschenkel 18b der U-Form des Gehäuses 18 sind zwei Führungsschienen 20 befestigt, auf denen ein Tischteil 22 mittels Führungseinheiten 24 in Längsrichtung L der Lineareinheit 10 verschiebbar gelagert ist. Wie lediglich in Figur 2 dargestellt ist, ist die Öffnung zwischen den freien Enden der Seitenschenkel 18a der U-Form des Gehäuses 18 über die gesamte Länge des Gehäuses 18 mittels eines Abdeckblechs 26 derart überdeckt, dass lediglich zwei Längsschlitze 28 verbleiben, durch welche zwei Befestigungsleisten 22a des Tischteils 22 ragen. An diesen Befestigungsleisten 22a kann ein mittels der Lineareinheit 10 zu verschiebendes Bauteil am Tischteil 22 befestigt werden. Das Abdeckblech 26 ist einenends an der Antriebseinheit 12 und andernends an der Endplatte 16 befestigt.

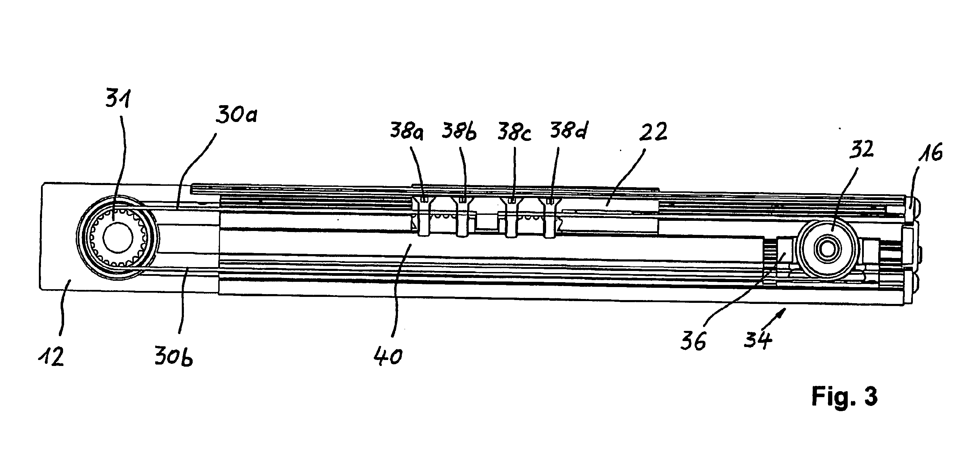

Wie insbesondere in Figur 1 und Figur 3 zu erkennen ist, ist die erfindungsgemäße Lineareinheit 10 mit einem Riementrieb ausgestattet. Der zu einer endlosen Schleife geschlossene Antriebsriemen 30 des Riementriebs ist zum einen um eine angetriebene Rolle 31 herumgeführt, welche in der Antriebseinheit 12 angeordnet ist, und zum anderen um eine freilaufende Rolle 32, welche der Endplatte 16 benachbart angeordnet ist. Durch diese Anordnung wird der Antriebsriemen 30 in ein Obertrum 30a und ein Untertrum 30b unterteilt.

Wie in Figur 1 dargestellt ist, ist der Antriebsriemen 30 an dem Tischteil 22 an vier Befestigungsstellen 38a, 38b, 38c und 38d befestigt.

Um den Antriebsriemen 30, der beispielsweise als Zahnriemen ausgebildet sein kann, spannen zu können, ist die freilaufende Rolle 32 in einer Spannvorrichtung 34 angeordnet.

Wie aus Figur 2 hervorgeht umfasst die Spannvorrichtung einen, im Wesentlichen U-förmigen Schlitten 36 mit zwei Seitenschenkeln 36a und einem Basisschenkel 36b. An seinem Basisschenkel 36b ist der Schlitten 36 mit einer hinterschnittenen Nut 36c versehen, welche entsprechend ausgebildete Vorsprünge 18b1 des Basisschenkels 18b des Gehäuses 18 umgreift.

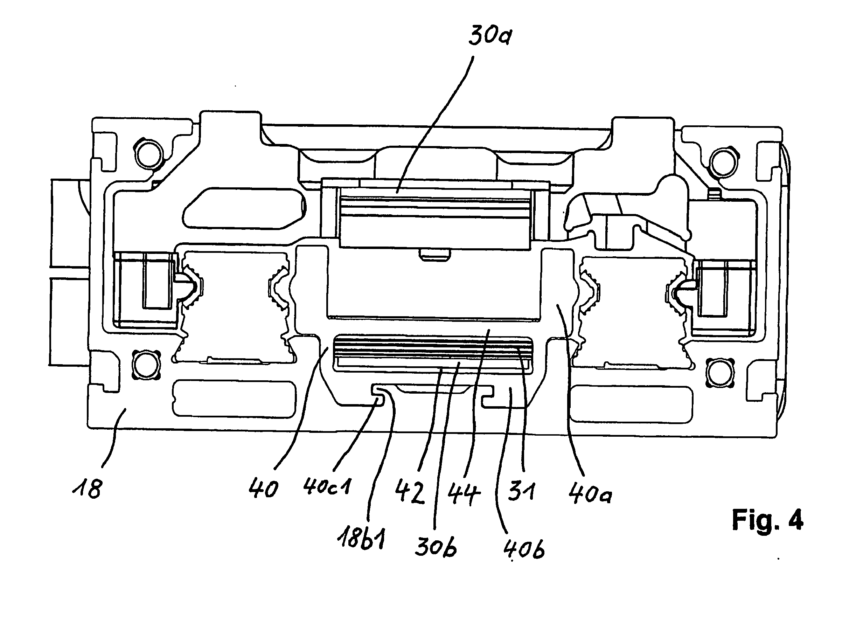

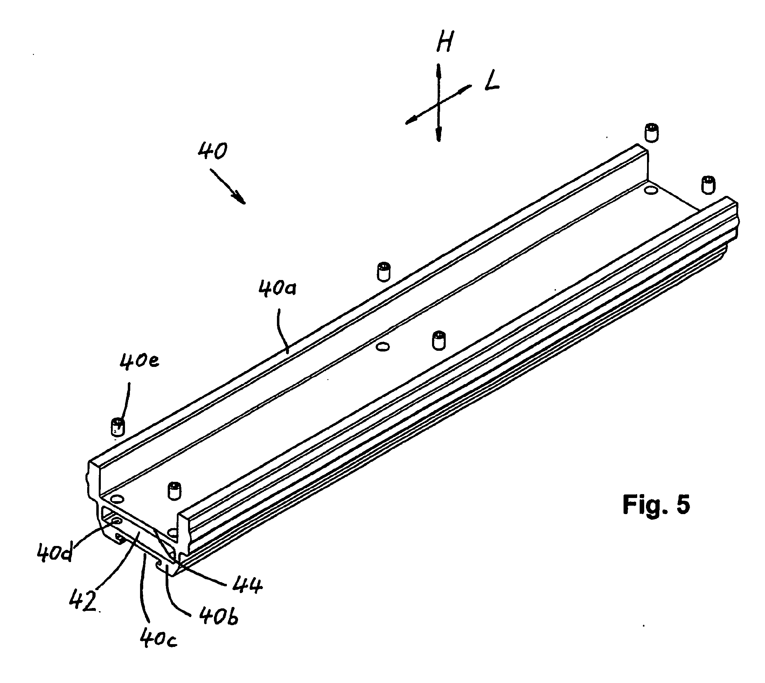

Aus Figur 3 ist ersichtlich, dass zwischen der angetriebenen Rolle 31 und der freilaufenden Rolle 32 ein Führungselement 40 angeordnet ist. Bei dem Führungselement 40 handelt es sich um ein langgestrecktes Strangpressprofil, welches in dem dargestellten Ausführungsbeispiel denselben Querschnitt wie der Schlitten 36 der Spannvorrichtung 34 aufweist (Figuren 4 und 5).

Wie aus den Figuren 4 und 5 hervorgeht, besitzt das Führungselement 40 eine U-förmige Gestalt mit zwei Seitenschenkeln 40a und einem, die Seitenschenkel verbindenden Basisschenkel 40b. Letzterer ist mit einer Kammer 42 versehen, die über die gesamte Länge des Führungselements 40 verläuft und von einem, parallel zum Basisschenkel 40b angeordneten Verstärkungssteg 44 begrenzt wird.

Weiterhin ist zu erkennen, dass das Obertrum 30a des Antriebsriemens 30 auf der, von der Kammer 42 abgewandten Seite des Verstärkungsstegs 44 verläuft, während das Untertrum 30b des Antriebsriemens 30 in der Kammer 42 aufgenommen ist.

Nachzutragen ist noch, dass der Verstärkungssteg 44 zusätzlich zur Stabilisierung der Gestalt des Führungselements 40 beiträgt.

Um ein, zwischen dem Führungselement 40 und dem Gehäuse 18 bestehendes Spiel reduzieren beziehungsweise beseitigen zu können, welches eine gewünschte Verschiebbarkeit des Führungselements 40 in Längsrichtung L ermöglicht, sind im Basisschenkel 40b des Führungselements 40 beidseits der Nut 40c, in Hochrichtung H verlaufende Gewindebohrungen 40d vorgesehen, welche den Basisschenkel 40b durchsetzen und in welche Gewindestifte 40e eingeschraubt werden können (Figur 5). Wenn sich die unteren Stirnflächen der Gewindestifte 40e auf dem Basisschenkel 18b des Gehäuses 18 abstützen, werden die, die Nut 40c begrenzenden Vorsprünge 40c1 gegen die Vorsprünge 18b1 gedrückt, wodurch ein, zwischen dem Führungselement 40 und dem Gehäuse 18 vorhandenes Spiel verringert oder beseitigt wird.

## Patentansprüche

1. Lineareinheit (10), umfassend eine Modulhaupteinheit (14) und eine Antriebseinheit (12),
wobei die Modulhaupteinheit (14) ein Gehäuse (18) mit einem, in Längsrichtung (L) mittels eines Antriebsriemens (30) bewegbaren Tischteil (22) aufweist,
wobei der Antriebsriemen (30) um eine, mit einer Antriebseinheit (12) verbundene Antriebsrolle (31) und eine freilaufende Rolle (32) herumgeführt ist,
wobei der Antriebsriemen (30) mit dem Tischteil (22) verbunden und in ein Obertrum (30a) und ein Untertrum (30b) unterteilt ist, wobei an einem Basisschenkel (18b) des Gehäuses (18) ein Führungselement (40) angeordnet ist, mit der das Obertrum (30a) vom Untertrum (30b) trennbar ist,
**dadurch gekennzeichnet, dass** die Lage des Führungselements (40) relativ zum Gehäuse (18) in dessen Längsrichtung (L) verstellbar ist, beispieisweise unter Verwendung wenigstens eines, sich am Gehäuse (18) abstützenden Gewindestifts (40e).

2. Lineareinheit nach Anspruch 1,
**dadurch gekennzeichnet, dass** das Führungselement (40) als separates Bauteil ausgeführt ist.

3. Lineareinheit nach einem der Ansprüche 1 bis 2,
**dadurch gekennzeichnet, dass** das Führungselement (40) an dem Gehäuse (18) geführt ist.

4. Lineareinheit nach Anspruch 3,
**dadurch gekennzeichnet, dass** eines der Teile, Gehäuse (18) oder Führungselement (40), eine hinterschnittene Nut (40c) aufweist, die zugehörige Vorsprünge (18b1) des jeweils anderen Teils, Führungselement (40) oder Gehäuse (18), umgreift.

5. Lineareinheit nach einem der Ansprüche 1 bis 4,
**dadurch gekennzeichnet, dass** Spieleinstellmittel (40e) vorgesehen sind, mittels derer das Spiel zwischen dem Führungselement (40) und dem Gehäuse (18) einstellbar ist.

6. Lineareinheit nach einem der Ansprüche 1 bis 5,
**dadurch gekennzeichnet, dass** das Führungselement (40) in einem orthogonal zur Bewegungsrichtung (L) genommenen Schnitt eine im Wesentlichen U-förmige Gestalt aufweist.

7. Lineareinheit nach Anspruch 6,
**dadurch gekennzeichnet, dass** das Führungselement (40) mittels des Basisschenkels (40b) der U-Form an dem Gehäuse (18) geführt ist oder/und die Spieleinstellmittel (40e) dem Basisschenkel (40b) der U-Form zugeordnet sind.

8. Lineareinheit nach einem der Ansprüche 1 bis 7,
**dadurch gekennzeichnet, dass** das Führungselement (40) einen, parallel zum Basisschenkel (40b) angeordneten Verstärkungssteg (44) aufweist.

9. Lineareinheit nach Anspruch 8,
**dadurch gekennzeichnet, dass** zwischen dem Basisschenkel (40b) und dem Verstärkungssteg (44) eine Kammer (42) zur Aufnahme des Untertrums (30b) ausgebildet ist.

10. Lineareinheit nach einem der Ansprüche 1 bis 9,
**dadurch gekennzeichnet, dass** der Antriebsriemen (30) ein Zahnriemen ist.

## Claims

1. Linear unit (10), comprising a main module unit (14) and a drive unit (12),
wherein the main module unit (14) has a housing (18) having a table part (22) that is movable in the longitudinal direction (L) by means of a drive belt (30),
wherein the drive belt (30) is guided around a drive roller (31), which is connected to a drive unit (12), and a free-running roller (32),
wherein the drive belt (30) is connected to the table part (22) and is subdivided into an upper strand (30a) and a lower strand (30b),
wherein on a base leg (18b) of the housing (18) there is arranged a guide element (40), with which the upper strand (30a) is separable from the lower strand (30b),
**characterized in that** the position of the guide element (40) in relation to the housing (18) is adjustable in the longitudinal direction thereof (L), for example using at least one threaded pin (40e) that is supported on the housing (18).

2. Linear unit according to Claim 1, **characterized in that** the guide element (40) is configured as a separate component.

3. Linear unit according to either of Claims 1 and 2, **characterized in that** the guide element (40) is guided on the housing (18).

4. Linear unit according to Claim 3, **characterized in that** one of the parts, housing (18) or guide element (40), has an undercut groove (40c), which engages around associated protrusions (18b1) on the respectively other part, guide element (40) or housing (18).

5. Linear unit according to one of Claims 1 to 4, **characterized in that** there are provided clearance setting means (40e), by means of which the clearance between the guide element (40) and the housing (18) is settable.

6. Linear unit according to one of Claims 1 to 5, **characterized in that** the guide element (40) has a substantially U-shaped form in a section taken orthogonally to the direction of movement (L).

7. Linear unit according to Claim 6, **characterized in that** the guide element (40) is guided on the housing (18) by means of the base leg (40b) of the U shape and/or the clearance setting means (40e) are assigned to the base leg (40b) of the U shape.

8. Linear unit according to one of Claims 1 to 7, **characterized in that** the guide element (40) has a reinforcing crosspiece (44) arranged parallel to the base leg (40b).

9. Linear unit according to Claim 8, **characterized in that** a chamber (42) for accommodating the lower strand (30b) is formed between the base leg (40b) and the reinforcing crosspiece (44).

10. Linear unit according to one of Claims 1 to 9, **characterized in that** the drive belt (30) is a toothed belt.

## Revendications

1. Unité linéaire (10), comportant une unité modulaire principale (14) et une unité d'entraînement (12),
l'unité modulaire principale (14) comprenant un boîtier (18) doté d'une partie de table (22) pouvant être déplacée dans la direction longitudinale (L) au moyen d'une courroie d'entraînement (30),
la courroie d'entraînement (30) étant guidée autour d'une poulie d'entraînement (31) reliée à une unité d'entraînement (12) et d'une poulie (32) pouvant tourner librement,
la courroie d'entraînement (30) étant reliée à la partie de table (22) et étant divisée en un tronçon supérieur (30a) et un tronçon inférieur (30b),
un élément de guidage (40) étant disposé sur une branche de base (18b) du boîtier (18), au moyen duquel élément de guidage le tronçon supérieur (30a) peut être séparé du tronçon inférieur (30b), **caractérisée en ce que** la position de l'élément de guidage (40) par rapport au boîtier (18) peut être ajustée dans la direction longitudinale (L) de ce dernier, par exemple en utilisant au moins une broche filetée (40e) s'appuyant contre le boîtier (18).

2. Unité linéaire selon la revendication 1,
**caractérisée en ce que** l'élément de guidage (40) est réalisé sous forme de partie structurale séparée.

3. Unité linéaire selon la revendication 1 ou 2,
**caractérisée en ce que** l'élément de guidage (40) est guidé contre le boîtier (18).

4. Unité linéaire selon la revendication 3,
**caractérisée en ce que** l'une des parties, soit le boîtier (18), soit l'élément de guidage (40), comprend une rainure en contre-dépouille (40c) qui vient en prise autour de saillies associées (18b1) de l'autre partie respective, à savoir soit l'élément de guidage (40), soit le boîtier (18).

5. Unité linéaire selon l'une quelconque des revendications 1 à 4,
**caractérisée en ce que** des moyens de réglage du jeu (40e) sont prévus, au moyen desquels le jeu entre l'élément de guidage (40) et le boîtier (18) peut être réglé.

6. Unité linéaire selon l'une quelconque des revendications 1 à 5,
**caractérisée en ce que**, dans une section prise de manière orthogonale à la direction de déplacement (L), l'élément de guidage (40) possède une configuration essentiellement en forme de U.

7. Unité linéaire selon la revendication 6,
**caractérisée en ce que** l'élément de guidage (40) est guidé contre le boîtier (18) au moyen de la branche de base (40b) de la forme en U et/ou les moyens de réglage du jeu (40e) sont associés à la branche de base (40b) de la forme en U.

8. Unité linéaire selon l'une quelconque des revendications 1 à 7,
**caractérisée en ce que** l'élément de guidage (40) comprend une nervure de renforcement (44) disposée parallèlement à la branche de base (40b).

9. Unité linéaire selon la revendication 8,
**caractérisée en ce qu'**une chambre (42) destinée à la réception du tronçon inférieur (30b) est réalisée entre la branche de base (40b) et la nervure de renforcement (44).

10. Unité linéaire selon l'une quelconque des revendications 1 à 9,
**caractérisée en ce que** la courroie d'entraînement (30) est une courroie dentée.
